# FASCICULE DE BREVET EUROPEEN

(11) **EP 0 392 912 B1**
(45) Date de publication et mention de la délivrance du brevet: **10.08.1994**
(21) Numéro de dépôt: 90400960.2
(22) Date de dépôt: 09.04.1990
(51) Int. Cl.: F16L 9/22, E02B 9/06

(54) **Conduite de transport de fluide**
Fluidtransportleitung
Fluid conveying conduit

(30) Priorité: 10.04.1989 FR 8904692
(43) Date de publication de la demande: 17.10.1990
(73) Titulaire: Matière, Marcel, F-15000 Aurillac (FR)
(72) Inventeur: Matière, Marcel, F-15000 Aurillac (FR)
(74) Mandataire: Le Brusque, Maurice

(56) Documents cités:
- EP-A- 0 244 890
- WO-A-86/00683
- US-A- 2 702 564

## Description

L'invention a pour objet une conduite de transport de fluide de grande section transversale, constituée par assemblage sur une surface de pose d'une pluralité d'éléments longitudinaux préfabriqués formant des tronçons mis les uns à la suite des autres suivant une direction longitudinale. L'invention s'applique plus spécialement à la réalisation de conduites de transport de fluide sous une pression importante pouvant, par exemple, dépasser 10 bars et être utilisable notamment pour la réalisation de systèmes d'assainissement ou d'adduction d'eau ou de conduites forcées pour les usines hydroélectriques.

L'invention couvre également certains procédés particulièrement avantageux pour la réalisation de conduites sous pression.

Les conduites sous pression de grande section transversale, par exemple les conduites forcées, sont souvent réalisées au moyen de tronçons de tubes métalliques, de section droite circulaire, placés les uns à la suite des autres et reliés de façon étanche d'une façon permettant de résister à la pression. Le tube peut être constitué de simples viroles cintrées assemblées par soudage ou bien, pour résister à de fortes pressions, être constitué d'une paroi épaisse moulée. Les éléments tubulaires sont alors munis à leurs extrémités d'organes de jonction par emboîtement ou de brides appliquées l'une sur l'autre par des moyens de serrage avec interposition de joints d'étanchéité.

Pour réaliser dans de bonnes conditions les soudures, il faut que la paroi ne soit pas trop épaisse et surtout que les tubes soient bien alignés. Les moyens de jonction par emboîtement permettent de supporter certains désalignements mais dans des limites assez étroites. Par ailleurs, il est difficile de réaliser des tubes métalliques à parois épaisses ayant de très grandes sections et, en pratique, le diamètre de telles conduites ne dépasse pas 56 pouces, ce qui correspond à 1,5 m² environ.

Pour obtenir des sections transversales plus importantes, on peut utiliser des tubes en béton armé ou précontraint mais de tels éléments sont extrèmement lourds et encombrants et, pour de très grandes sections, leur transport et leur mise en place deviennent très difficiles. En outre, les tubes en béton ne peuvent supporter que des pressions assez faibles.

Par ailleurs, lorsque une conduite à section circulaire est enterrée dans le sol, elle prend appui essentiellement le long de la génératrice inférieure qui est donc très chargée. On peut aussi faire reposer une conduite métallique sur des berceaux de forme adéquate mais ceux-ci doivent être écartés les uns des autres et la conduite est soumise à des efforts de flexion.

Le déposant a déjà proposé un nouveau mode de réalisation de conduites enterrées à partir d'éléments préfabriqués dont les dimensions restent dans les limites permettant un transport routier et qui peuvent être assemblés sur le site. De telles dispositions, qui font l'objet, par exemple, des brevets européens 244.890 et 0188487 du même inventeur, permettent de réaliser des structures creuses tubulaires de très grandes sections, utilisables éventuellement pour le transport de fluide si l'on prévoit un revêtement d'étanchéité adéquat. Mais de tels modes de réalisation conduisent à manipuler des éléments de très grandes dimensions et d'un poids élevé et il est assez difficile de réaliser, à la pose, un alignement parfait de ces éléments pour assurer une étanchéité suffisante sur des pressions élevées.

Le document US-A-2.702.564 décrit, par ailleurs, un procédé de réalisation de conduites de circulation d'air chaud constituées de deux parties semi-circulaires, respectivement une partie inférieure en béton et une partie supérieure métallique, l'ensemble étant noyé dans du béton. La partie inférieure sert ainsi de lest lors de la coulée du béton d'enrobage, la voûte métallique étant maintenue par ses bords latéraux qui sont engagés dans deux gorges ménagées sur les bords latéraux de la partie inférieure. La résistance à la pression en service est donc assurée, après la prise, par le béton d'enrobage, la partie supérieure métallique servant simplement de coffrage perdu.

L'invention a pour objet de nouvelles dispositions qui permettent de résoudre l'ensemble des problèmes de transport, de mise en place et d'alignement pour la réalisation de conduites de transport de fluide pouvant avoir de très grandes dimensions, par exemple une section transversale pouvant dépasser 10 m² et résister à des pressions éventuellement supérieures à 10 bars.

L'invention concerne donc, d'une façon générale, la réalisation de conduites constituées par assemblage, sur une surface de pose, d'une pluralité d'éléments longitudinaux préfabriqués couvrant chacun une partie de la section transversale, cette dernière présentant une partie supérieure en forme de voûte sensiblement circulaire et une partie inférieure à face inférieure plane formant une base reposant sur le sol, lesdits éléments longitudinaux étant reliés entre eux d'une façon étanche permettant de supporter une pression interne.

Conformément à l'invention, la conduite présente une structure mixte, la partie supérieure étant constituée d'une paroi mince métallique cintrée en forme de voûte et susceptible de résister aux efforts de traction dûs à la pression interne et la base plane étant constituée d'une dalle massive en béton armé susceptible de résister aux efforts de flexion dûs à la pression interne, et ladite paroi métallique cintrée est soudée, le long de ses deux bords latéraux, parallèles à la dalle en béton, respectivement sur les extrémités supérieures de deux profilés de jonction métalliques comportant chacun une partie supérieure dirigée tangentiellement à la naissance de la voûte et une partie inférieure fixée sur la dalle en béton d'une façon étanche permettant de résister à la pression interne.

Dans certains cas, la dalle en béton pourra assurer elle-même l'étanchéité nécessaire.

Toutefois, dans un mode de réalisation préférentiel, la dalle en béton est recouverte par une paroi mince s'étendant entre les deux profilés et constituant une peau d'étanchéité. Celle-ci peut avantageusement être constituée d'une plaque métallique soudée le long de ses deux bords latéraux sur les deux profilés de jonction.

Par ailleurs, les deux profilés de jonction peuvent être reliés entre eux à l'avance par des pièces entretoises rigides de façon à former un ensemble de jonction qui est scellé sur la dalle en béton.

Mais les deux profilés peuvent aussi être scellés sur au moins deux poutrelles en béton armé qui constituent, d'une part, les pièces entretoises de maintien de l'écartement et, d'autre part, des pieds de positionnement de la base de la conduite, lesdites poutrelles pouvant, après la pose, être noyées dans du béton coulé en place.

Dans un mode de réalisation particulier, chaque profilé longitudinal de jonction est constitué d'une cornière comprenant une aile sensiblement horizontale de fixation sur la dalle et une aile dirigée suivant une tangente au bord latéral de la voûte.

Dans un autre mode de réalisation, chaque profité de jonction est constitué d'une tôle sensiblement plane dont une partie est noyée dans la partie en béton de la dalle et l'autre partie est orientée suivant la direction à donner à la voûte à la naissance de celle-ci.

Selon encore une autre variante, la pièce entretoise est constituée d'une plaque métallique de forme rectangulaire comportant deux bords latéraux parallèles à l'axe longitudinal sur lesquels sont ménagées, respectivement, deux rainures concaves vers le haut qui constituent les profilés longitudinaux de jonction de la voûte, cette dernière étant munie, le long de ses deux bords latéraux, respectivement de deux brides de profil inverse de celui des rainures et susceptibles de s'engager dans ces dernières avec interposition d'un joint d'étanchéité, chaque bride étant associée à des moyens de serrage répartis sur toute sa longueur et prenant appui d'un côté sur la bride et de l'autre sur la dalle.

La conduite ainsi constituée peut être réalisée de différentes façons.

Dans un procédé de réalisation particulièrement avantageux, on réalise à l'avance un ensemble de jonction et d'alignement comprenant deux profilés longitudinaux écartés et parallèles, reliés rigidement entre eux par au moins une pièce entretoise, et, pour construire un tronçon de conduite, on fixe ledit ensemble de jonction sur une dalle continue rigide reposant sur le sol et s'étendant entre les deux profilés en alignant lesdits profilés avec ceux de la partie déjà posée, paralèlement à l'axe longitudinal, puis l'on pose les éléments préfabriqués formant la voûte en fixant de façon étanche les deux bords latéraux ce celle-ci sur les deux profilés longitudinaux. Lorsque les profilés de jonction sont reliés par une plaque métallique, celle-ci constitue avantageusement un coffrage perdu pour la coulée de la dalle.

Mais la dalle rigide peut aussi être réalisée en béton coulé en place à l'avancement, l'ensemble de jonction étant scellé sur la face supérieure de la dalle ainsi coulée.

Dans ce cas, selon un autre mode de réalisation avantageux, après avoir aménagé au niveau voulu une surface de pose aplanie, on pose sur celle-ci les armatures d'une dalle en y plaçant les inserts nécessaires, puis on coule du béton entre des coffrages adéquats, constitués, éventuellement, par les parois d'une tranchée, de façon à réaliser une dalle continue dans laquelle les armatures sont noyées, puis on scelle sur la face supérieure de cette dalle un ensemble de jonction préfabriqué constitué au moins de deux profilés longitudinaux dont on règle l'alignement avec les profilés correspondants de la partie déjà posée, on recouvre éventuellement la dalle, entre les profilés, d'une plaque d'étanchéité, puis l'on pose les éléments de paroi cintrée préfabriquée pour former une voûte dont les bords latéraux se raccordent tangentiellement aux deux profilés et l'on réalise une fixation étanche desdits bords latéraux avec les profilés correspondants.

Mais l'invention sera mieux comprise par la description détaillée qui va suivre d'un certain nombre de modes de réalisation, donnés à titre d'exemples non limitatifs, en se référant aux dessins annexés.
La figure 1 est une coupe transversale d'un tronçon d'une conduite réalisée selon l'invention.
La Figure 2 représente en perspective un élément de base dans une variante de réalisation.
La Figure 3 représente en perspective un autre mode de réalisation de la base;
La Figure 4 et la Figure 5 montrent respectivement, en coupe transversale deux autres modes de réalisation de l'invention.
La Figure 6 est une vue en coupe longitudinale d'un mode de jonction entre deux tronçons consécutifs.
La Figure 7 représente schématiquement, à échelle agrandie, un autre mode de jonction.
La Figure 8 et la Figure 9 représentent schématiquement les différentes étapes de réalisation d'une conduite selon deux variantes de l'invention.

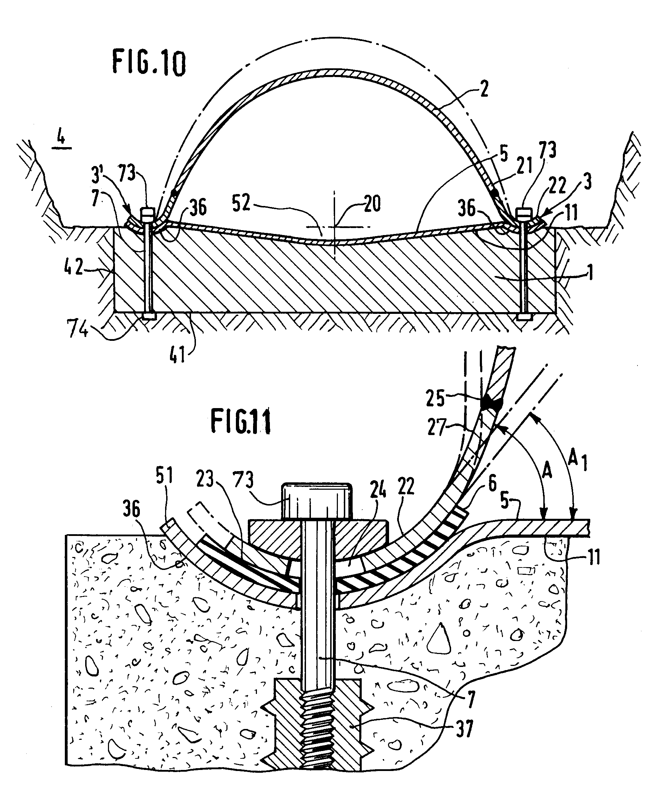

La Figure 10 montre, en coupe transversale, une autre variante de réalisation de l'invention.
La Figure 11 est une vue de détails de la jonction entre la voûte et la dalle dans le mode de réalisation de la Figure 11.

Le brevet européen EP-0188487 du même inventeur, déjà cité, décrit un procédé de réalisation d'un conduit enterré constitué de tronçons adjacents disposés à la suite les uns des autres sur le fond aplani et tassé d'une tranchée et comprenant chacun un élément inférieur formant un radier posé sur le sol et dont les bords constituent des organes d'appui articulés pour les bords latéraux d'un élément supérieur cintré en forme de voûte. Les deux éléments sont réalisés en béton, la voûte pouvant notamment se déformer légèrement de façon à transmettre latéralement au remblai une partie des efforts supportés.

Dans la présente invention, la conduite est également réalisée sous forme de tronçons juxtaposés mais une première différente importante réside dans le fait que le radier est constitué par une simple dalle massive en béton armé 1 et la voûte par une paroi métallique cintrée 2 dont les bords latéraux 21 sont fixés, sur toute leur longueur, sur des profilés 3 et 3' scellés dans la dalle 1.

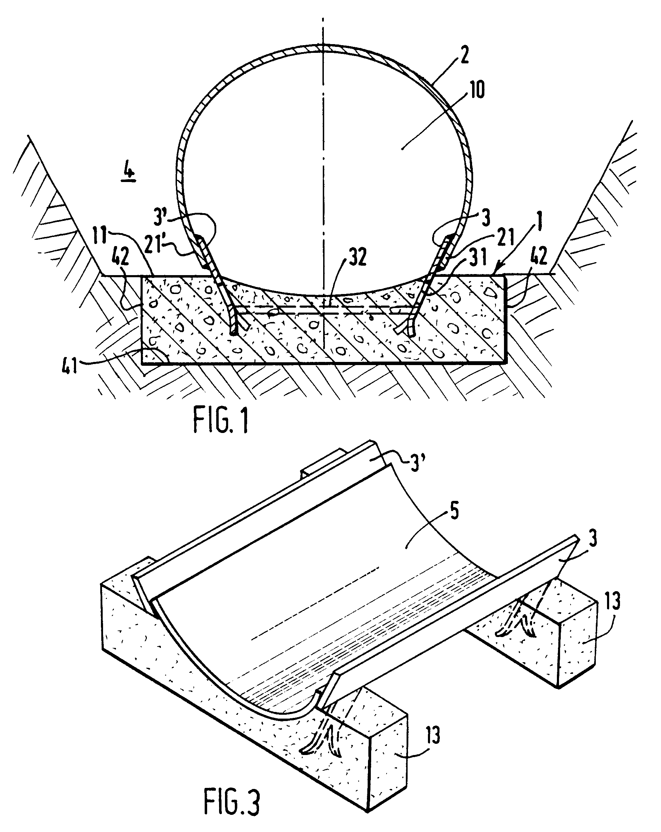

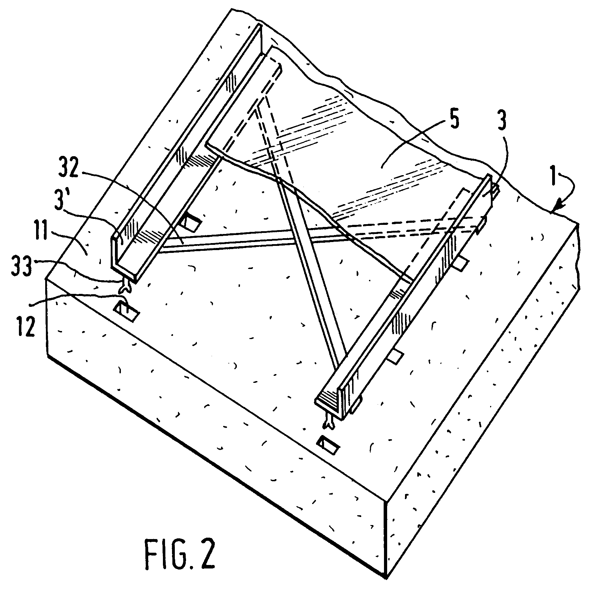

La dalle 1 peut être constituée d'éléments plans préfabriqués, comme on l'a représenté sur la Figure 2, ou bien, comme indiqué sur la Figure 1, être directement coutée en place dans une tranchée 42.

Les organes de jonction longitudinaux 3 et 3' sont constitués de profilés métalliques reliés entre eux par des entretoises qui maintiennent leur parallélisme et leur écartement.

Dans le mode de réalisation le plus simple et représenté sur la Figure 1, les deux profilés 3 et 3' sont de simples tôles dont la partie inférieure 31 est munie de pattes de scellement et qui sont noyées dans la dalle 1, des ouvertures ou échancrures permettant le passage du béton pour un meilleur scellement.

Selon l'une des caractéristiques essentielles de l'invention, les profilés 3 et 3′ sont parfaitement alignés, à la pose, avec les profilés correspondants de la partie du conduit déjà réalisé. Un tel alignement peut éventuellement être réalisé lors du scellement des profilés 3 et 3′ dans le béton encore frais de la dalle 1, celle-ci constituant, après la prise, une entretoise de maintien de l'écartement et du parallélisme des profilés 3 et 3′. Cependant, il est préférable de régler le parallélisme et l'écartement des profilés en atelier, les deux profilés 3 et 3′ étant alors reliés rigidement par des barres métalliques 32 constituant des entretoises. L'ensemble est alors posé sur la dalle 1 et aligné en bloc, les barres entretoises 32 étant noyées dans la dalle 1.

Dans le mode de réalisation de la Figure 2, les deux profilés 3 et 3′ sont des cornières reliées entre elles par des barres 32 et l'ensemble est posé sur la dalle 1 qui est constituée par un élément préfabriqué muni, sur sa face supérieure 11, d'évidements 12 ménagés à la coulée et dans lesquels pénètrent des pattes de scellement 33 solidaires des cornières 3 et 3′.

Lorsque la dalle 1 est préfabriquée, deux modes de réalisation sont possibles.

Tout d'abord, les profilés 3 et 3′ peuvent être posés et scellés lors de la fabrication de la dalle, en réglant leur parallélisme et leur écartement. Par exemple, les deux profilés 3 et 3′ peuvent être positionnés sur le fond du moule, la dalle étant coulée à l'envers puis retournée.

Mais on peut aussi poser les profilés sur la dalle déjà réalisée, celle-ci étant munie des évidements 12 dimensionnés de façon à laisser un jeu. Dans ce cas, il est plus avantageux de régler à l'avance l'écartement et le parallélisme des profilés 3 et 3′ au moyen des barres 32. Les éléments de dalle 1 sont posés les uns à la suite des autres sur le fond 41 de la tranchée 4, puis l'on pose les ensembles de jonction constitués par les deux profilés 3 et 3′ reliés entre eux dont un peut régler l'alignement grâce au jeu laissé par les évidements 12, les profilés étant ensuite scellés.

Si le liquide transporté dans la conduite n'est pas corrosif à l'égard du béton et si ce dernier est d'une qualité suffisante pour assurer l'étanchéité, la face supérieure 11 de la dalle 1 peut constituer directement le fond de la conduite 10.

Mais dans de nombreux cas, il est préférable de recouvrir le béton d'une plaque constituant une peau d'étanchéité.

Sur la Figure 2, par exemple, une plaque 5 est placée entre les deux cornières 3 et 3′. Dans ce cas, la plaque 5 constitue une simple peau d'étanchéité appliquée sur la face supérieure 11 de la dalle 1 et ne supporte aucun effort. Elle peut donc être constituée en une tôle mince ou même en matière plastique. Un coulis de ciment est avantageusement coulé entre la plaque 5 et la face supérieure 11 de la dalle 1 pour assurer la transmission à celle-ci des efforts appliqués par la pression du fluide.

Cependant, il sera intéressant de faire jouer à la plaque 5 le rôle de pièce entretoise en lui donnant la rigidité nécessaire.

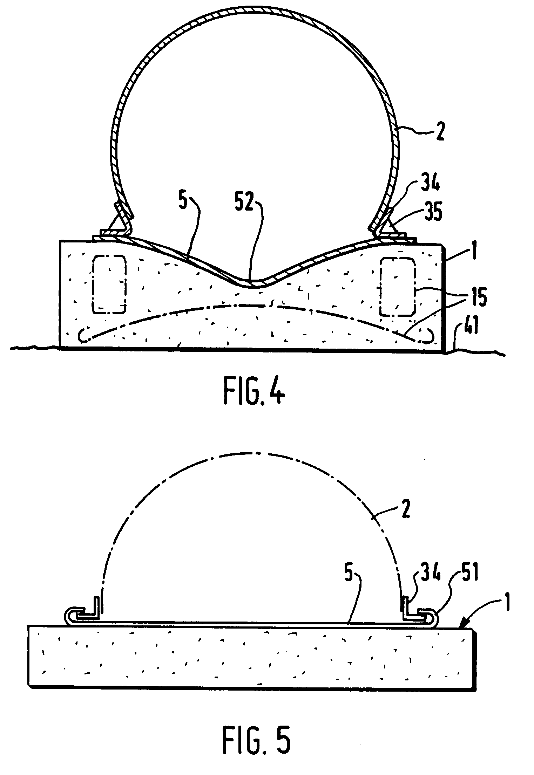

C'est ce qui a été représenté sur la Figure 3. La plaque 5, qui a une forme incurvée de façon à constituer le fond de la conduite 10, peut être constituée d'une tôle métallique épaisse, qui se raccorde tangentiellement et est soudée au profilés 3 et 3′.

Ces derniers sont scellés dans deux poutrelles en béton 13, écartées l'une de l'autre, qui constituent, avec la plaque 5, les pièces entretoises de maintien de l'écartement et du parallélisme des profilés 3 et 3′. On obtient ainsi un ensemble préfabriqué dont le poids reste assez limité pour permettre sa manipulation par une grue, même pour des dimensions importantes.

Lorsque les profilés 3, 3′ sont reliés par une plaque, il est intéressant de faire jouer à celle-ci le rôle d'un coffrage perdu. En effet, après avoir fixé les profilés 3, 3′ sur la plaque 5 en réglant leur écartement et leur parallélisme, on retourne l'ensemble de façon à constituer le fond d'un moule en associant à la plaque 5 des parois latérales. On met en place le ferraillage puis l'on coule le béton. Après la prise l'ensemble est démoulé et retourné et constitue un élément de base monobloc. La même technique peut être employée pour réaliser des poutrelles séparées au lieu d'une dalle continue.

Pour réaliser une conduite, on pourra donc placer les uns à la suite des autres des éléments de base ainsi réalisés tels que celui qui est représenté sur la Figure 3, régler l'alignement des profilés 3 et 3′, suivant la direction longitudinale de la conduite, puis souder les extrémités desdits profilés ainsi que celles de la plaque du fond 5 aux extrémités correspondantes des profilés et du fond de l'élément adjacent déjà posé.

Si la rigidité du fond 5, compte-tenu de la pression appliquée en service, est suffisante, le fond pourra être constitué d'éléments préfabriqués ainsi juxtaposés. Mais on peut aussi noyer les poutrelles de liaison 13 dans un béton coulé en place de façon à constituer une dalle continue.

La pression interne appliquée par le fluide transporté dans la conduite 10 est supportée d'un côté par la paroi 2 en forme de secteur cylindrique et de l'autre par la dalle 1. Cette dernière est donc soumise à des efforts de flexion auxquels elle résiste particulièrement bien grâce à sa structure en béton, l'épaisseur et le ferraillage étant déterminés facilement en fonction des efforts appliqués qui dépendent de la pression et des dimensions de la conduite. En revanche, la paroi supérieure 2 est soumise à des efforts de traction et peut être réalisée à partir de tôles métalliques cintrées formant des éléments assez légers et pouvant être empilés les uns sur les autres pour faciliter le transport.

Bien entendu, les tôles constituant la paroi supérieure 2 doivent être traitées pour résister également à la corrosion. On peut par exemple, après la pose de la conduite, projeter sur la paroi un produit de protection plastique ou même un simple mortier.

Du fait que les organes de jonction 3 et 3′ sont constitués de profilés métalliques, on peut réaliser la fixation des bords latéraux 21 de la voûte 2 par simple soudure ou boulonnage, avec au besoin, interposition d'un joint d'étanchéité. Il en est de même de la liaison entre les extrémités transversales des plaques 5.

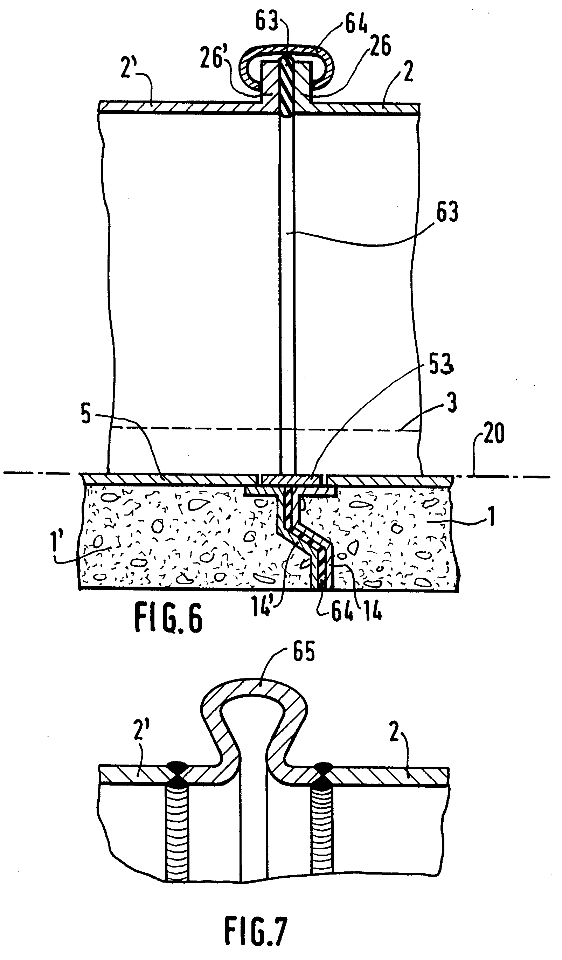

Toutefois, on peut aussi, comme on l'a représenté sur la figure 6, prévoir aux extrémités des éléments consécutifs 2, 2', des brides annulaires 26, 26', appliquées l'une sur l'autre avec interposition d'un joint 63 en néoprène ou autre matière d'étanchéité et serrées, par exemple, par des étriers 64 ou des tiges de serrage réparties sur la périphérie du joint.

Un tel joint en néoprène peut légèrement s'écraser sous l'effet des dilatations mais, si celles-ci sont trop importantes, on peut, comme on l'a représenté sur la figure 7, prévoir entre deux éléments de voûte successifs 2, 2', des joints à section en oméga ou bien en ondes 65 permettant d'encaisser tes dilatations et qui peuvent être soudés aux extrémités transversales en regard des deux éléments 2, 2', ou bien fixés par tout autre moyen.

Comme on le voit sur la Figure 6, lorsque la base 1 est constituée d'éléments préfabriqués, la jonction des extrémités transversales des éléments de base 1 sera avantageusement faite par emboîtement, tes extrémités en regard de deux dalles adjacentes 1, 1' étant munies de parties en creux en saillie s'engageant les unes dans les autres.

Dans ce cas, il sera utile de placer aux deux extrémités des pièces métalliques embouties 14, 14' qui permettent d'éviter les détériorations lors du transport.

Un joint d'étanchéité 64 est placé entre les extrémités adjacentes des deux éléments 1 et 1', l'ensemble étant recouvert d'un couvrejoint 53 qui assure la continuité de la paroi inférieure 5.

On notera qu'une telle disposition permet d'absorber les dilatations différentielles.

Des pièces particulières pourraient aussi être interposées entre les éléments longitudinaux, par exemple pour réaliser les changements de direction.

Les dispositions qui viennent d'être décrites présentent de nombreux avantages par rapport aux techniques utilisées jusqu'à présent pour la réalisation de conduites sous pression.

En effet, par rapport a une conduite métallique circulaire, l'invention permet de réduire l'encombrement en hauteur et de diminuer les contraintes appliquées sur le sol grâce à la répartition de la charge assurée par la dalle en béton. Celle-ci améliore également la résistance aux effets de cheminement longitudinal ou transversal grâce aux frottements entre le sol et la dalle dont la face inférieure peut d'ailleurs être munie de parties d'ancrage. La dalle en béton facilite également la réalisation de l'étanchéité entre les différents éléments.

Grâce à l'utilisation des profilés de jonction 3 et 3′ scellés dans les dalles 1, il est possible d'assurer à la pose l'alignement des éléments constituant les tronçons adjacents. En outre, par rapport à des conduites en béton, l'invention présente l'avantage d'utiliser en partie des éléments métalliques plus légers et plus faciles à manipuler et à assembler.

On notera , par ailleurs, que le mode de réalisation adopté permet une construction modulaire, les épaisseurs et la constitution de la tôle supérieure 2 et du radier 1 pouvant être adaptés en fonction des efforts supportés. Par exemple, dans le cas de réalisation d'une conduite forcée, on pourrait faire varier l'épaisseur de la tôle supérieure 2 ainsi que le ferraillage et l'épaisseur de la dalle 1 et même sa constitution en fonction de la hauteur d'eau.

En effet, dans le cas d'une conduite, et en particulier d'une conduite forcée, qui s'étend sur une grande longueur dans des terrains dont le niveau et la nature peuvent être très différents, il est particulièrement intéressant s'adapter la constitution de la conduite aux conditions d'exploitation. Par exemple, dans certains terrains, il est préférable de ne pas trop alourdir la conduite et d'utiliser de préférence le mode de réalisation de la Figure 3 dans lequel la conduite est posée sur des poutrelles écartées. En revanche, dans d'autres terrains, il faudra augmenter la surface d'assise de la conduite et éventuellement son poids, la dalle en béton jouant alors le rôle d'un lest permettant le maintien de la conduite par exemple lorsqu'elle celle-ci est placée dans la nappe phréatique.

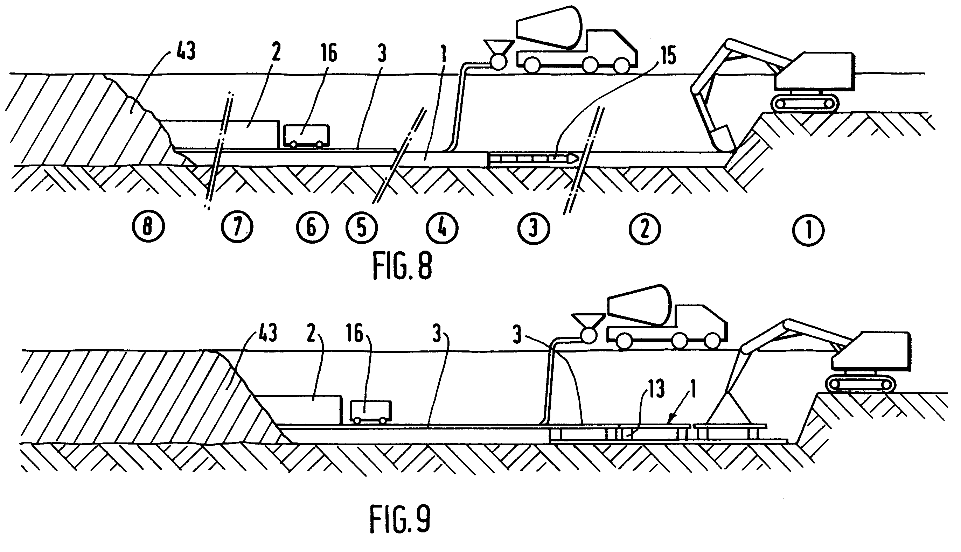

Un autre avantage de l'invention réside dans le fait qu'il permet une construction rationnelle et très rapide de la conduite. A titre d'exemple, les Figures 8 et 9 montrent deux processus de construction adaptés aux différents modes de réalisation qui viennent d'être décrits.

La Figure 8 s'applique à la réalisation d'une conduite dont la partie inférieure est coulée en place.

Tout d'abord en (1), on réalise avec les engins de terrassement adéquats, une tranchée 4 présentant un fond aplani et tassé 41 au niveau voulu. Comme indiqué en (2), on peut ménager dans le fond 41 une tranchée 42 dans laquelle sera directement coulé le béton.

La troisième étape consiste à poser le ferraillage 15 de la dalle 1, qui est préfabriqué en atelier et dans lesquels on aura placé les inserts nécessaires, par exemple des pièces d'extrémité 14 ou bien des tubes de passage de tiges de précontrainte.

En quatrième étape, on coule alors le béton enrobant les armatures 14 pour réaliser la dalle 1 en y ménageant, le cas échéant, des logements pour les pattes de scellement des profilés 3, 3′. Ces derniers, qui sont reliés entre eux par des barres entretoises ou par la plaque 5 sont posés sur la dalle, alignés avec les profilés déjà posés, puis scellés, comme indiqué en (5).

La dalle 1 constitue alors un excellent chemin de roulement sur lequel peut être placé un organe de support tel qu'un chariot 16 formant un gabarit et qui sert à la pose des éléments de voûte 2, et peut éventuellement rouler sur les profilés 3, comme indiqué en (6). Selon les dimensions de la voûte, celle-ci peut être constituée de plaques soudées les unes aux autres, la soudure pouvant être réalisée en continu et de façon automatique par un appareil porté, par exemple, le chariot de support 16.

On met en place les organes de serrage des joints transversaux ou bien les joints de dilatation 65 et on réalise éventuellement un traitement de la voûte, par exemple pour sa protection contre la corrosion (Etape 7).

Le conduit est alors terminé et l'on peut, dans une huitième et dernière étape, enterrer la partie déjà réalisée de la conduite sous un remblai 43.

On voit donc qu'il est possible de réaliser les différentes étapes du procédé au fur et à mesure de l'avancement de la conduite.

La Figure 9 montre le même procédé adapté à l'utilisation d'éléments préfabriqués.

Après avoir creusé la tranchée 4, on place sur le fond 41 recouvert d'un béton de propreté, des éléments de base préfabriqués 1 comprenant chacun deux profilés 3, 3′ reliés entre eux par des poutrelles en béton 13 et, éventuellement, par une plaque continue 5. Les éléments 1 ainsi constitués peuvent être manipulés et leur position réglée de façon à réaliser l'alignement des profilés 3 avec ceux de la partie déjà construite.

L'ensemble est alors noyé dans un béton coulé en place et, après la prise, on dispose, comme précédemment, d'un chemin de roulement sur lequel peut se déplacer un charriot 16 facilitant la mise en place et la jonction des éléments de voûte 2. Après la pose de l'étanchéité et d'un produit anti-corrosion, l'ensemble est recouvert du talus 43.

Bien entendu, l'invention ne se limite pas aux seuls détails des différents modes de réalisation qui viennent d'être décrits à titre de simples exemples, d'autres variantes pouvant être imaginées.

Par exemple, les profilés 3 et 3′ peuvent avoir différentes formes dont on a représenté deux exemples sur les Figures 4 et 5.

Dans le cas de la Figure 4, les deux profilés de jonction sont des cornières 34 qui comportent une face horizontale soudée sur la plaque 5 et une face inclinée qui est dirigée suivant une tangente à la voûte 2 à la naissance de celle-ci, tes cornières 34 pouvant éventuellement être renforcées par des goussets 35. La plaque 5 qui constitue ta face supérieure de ta dalle 1 peut avoir une forme quelconque adaptée aux circonstances, par exemple être incurvée pour former une cunette centrale 52.

La Figure 5 donne, au contraire, un exemple de conduite à profit demi-circulaire, les profilés de jonction étant constitués de cornières droites 34 fixées sur la plaque 5 dont les bords latéraux peuvent être repliés et soudés de façon à améliorer la rigidité et l'étanchéité.

Les Figures 11 et 12 montrent un autre mode de réalisation présentant des avantages particuliers.

Dans ce cas, des parties incurvées en forme de rainures 36, concaves vers le haut sont ménagées sur les bords latéraux de la plaque 5.

Les deux bords latéraux 21 de la paroi supérieure 2 sont également incurvés de façon à former des brides 22 de profil inverse, convexe vers le bas, qui peuvent s'appliquer sur les rainures concaves 36.

Un joint d'étanchéité constitué d'un ruban plat 6 en matière synthètique visco-élastique est interposé entre chaque rainure 36 et la bride 22 correspondante.

Les brides 22 sont fixées sur la dalle 1 par une pluralité de tiges 7 réparties régulièrement sur la longueur de l'élément supérieur et mises sous tension en prenant appui par une tête 73 sur la bride 22 et par leur extrémité inférieure 74 sur la dalle 1.

Par exemple dans le mode de réalisation de la Figure 11, les tiges 71 passent dans des orifices ménagés, à intervalles réguliers, dans la dalle 1 et prennent appui par une tête inférieure 74 sur la face inférieure de la dalle 1 et par une tête supérieure 73 sur la bride 22, la tige 31 pouvant être mise sous tension de toute façon connue. Mais les tiges 7 peuvent aussi être scellées à l'avance dans la dalle 1, à la coulée de celle-ci, et comporter une extrémité supérieure filetée sur laquelle est vissée un écrou, la mise en tension pouvant là encore être réalisée d'une façon connue pour la précontrainte du béton.

La tige 7 peut aussi se visser, à la façon d'un tirefond, dans un insert 37 fileté intérieurement et scellé dans la dalle 1, comme on l'a représenté sur la Figure 12.

Un tel serrage élastique du joint d'étanchéité 6 permet d'absorber les déformations résultant, par exemple, des contraintes thermiques, ainsi que des variations de pression résultant, par exemple, d'un coup de bélier.

La voûte supérieure 2 peut être constituée, selon ses dimensions, soit d'un seul élément réalisé par cintrage ou emboutissage en ménageant, à ses extrémités, les brides en gouttière 22, soit, pour des tailles importantes, de plusieurs plaques soudées entre elles.

En particulier, les extrémités 21 de la voûte 2 sur lesquelles sont ménagées les brides arrondies 22 peuvent être constituées d'éléments séparés ayant, en section droite, une forme en crosse et constituant des rives sur lesquelles viennent se fixer les bords latéraux de la voûte 2, les extrémités en regard étant chanfreinées pour la réalisation de soudure 25.

Comme on l'a indiqué sur la Figure 12, grâce à la forme circulaire des brides 22 et de leurs rainures d'appui, on peut faire glisser la bride sur son siège de façon à modifier son orientation, en prévoyant, par exemple, des trous 24 de section oblongue pour le passage des tiges de serrage 31. De la sorte, on peut faire varier l'angle d'inclinaison A de la partie rectiligne 27 qui prolonge la bride 22 vers le haut et constitue la naissance de la voûte. Comme on l'a représenté sur la Figure 1, on peut ainsi, sans modifier la largeur entre les appuis 22, faire varier le profil de la voûte et, par conséquent, la section de passage du conduit.

Une telle réalisation des profilés 3, 3' de jonction des rives sous forme de pièces séparées présente un autre avantage intéressant.

Il est évident, en effet, que les parties de la voûte soumises aux contraintes les plus importantes sont, précisément, les rives par lesquelles elle est fixée à la dalle inférieure 1. Lorsque les rives sont constituées de profilés séparés 3, on peut facilement déterminer leur épaisseur et, par exemple, la nature du métal employé de façon à résister aux efforts encaissés et choisir pour la voûte 2 une épaisseur et, éventuellement, une nature de métal différente.

On peut ainsi, par exemple, standardiser les pièces et disposer de profilés préfabriqués prévus pour des efforts au mètre linéaire déterminés, par exemple: 1 T/ml, 2 T/ml, 5 T/ml, 10 T/ml, etc.. et des voûtes préformées d'épaisseur et de dimensions différentes, et, selon la pression interne, le diamètre de la voûte et la largeur entre les rives calculer les contraintes appliquées respectivement sur la voûte et sur les rives et associer des éléments de rive et des éléments de voûte susceptibles de résister à ces contraintes.

On peut aussi, en fonction des contraintes appliquées, renforcer les rives 51 de la paroi d'étanchéité 5.

Mais dans d'autres cas, on pourra au contraire utiliser des modes de réalisation plus économiques et, par exemple, dans le cas de la Figure 1, les profilés de jonction 3 et 3′ pourraient être constitués de simples plaques telles que celles qu'on utilise pour la réalisation de pistes d'aviation provisoire.

On voit que l'invention peut faire l'objet de nombres variantes permettant de répondre à des conditions d'exploitation très variées.

Par ailleurs, s'il est naturel de donner à l'élément supérieur 2 une forme semi-circulaire, d'autres formes pourraient être adoptées en fonction des conditions d'exploitation, notamment de la pression interne et de l'encombrement respecté éventuellement ainsi que du débit à assurer.

Les signes de référence insérés après les caractéristiques techniques mentionnées dans les revendications, ont pour seul but de faciliter la compréhension de ces dernières, et n'en limitent aucunement la portée.

## Revendications

1. Conduite de transport de fluide de grande section transversale s'étendant suivant un axe longitudinal et constituée par assemblage, sur une surface de pose, d'une pluralité d'éléments longitudinaux préfabriqués (1, 2) reliés entre eux d'une façon étanche permettant de supporter une pression interne, la dite conduite comprenant, en section transversale, une partie supérieure (2) constituée d'une paroi mince métallique, cintrée en forme de voûte sensiblement circulaire, et une partie inférieure (1) constituée d'une dalle en béton armé formant une base rigide reposant sur le sol, et limitée par une face supérieure continue (11) constituant le fond de la conduite,
caractérisée par le fait que la dite paroi métallique cintrée (2) formant la partie supérieure est soudée, le long de ses deux bords latéraux (21,21') parallèles à la dalle en béton, respectivement sur les extrémités supérieures de deux profiles de jonction métalliques (3,3') comportant chacun une partie supérieure dirigée tangentiellement à la naissance de la voûte et une partie inférieure (31) fixée sur la dalle en béton (1) d'une façon étanche permettant de résister à la pression interne.

2. Conduite de transport de fluide selon la revendication 1, caractérisée par le fait que la partie inférieure (31) de chaque profilé métallique de jonction (3, 3') est scellée à l'intérieur de la dalle en béton (1).

3. Conduite de transport de fluide selon la revendication 1, caractérisée par le fait que la partie inférieure de chaque profilé de jonction (3, 3') s'étend suivant une face d'application correspondante de la dalle en béton sur laquelle elle est maintenue appliquée par une pluralité de tiges de serrage (7) régulièrement réparties sur sa longueur et prenant appui d'un côté sur ladite partie inférieure du profilé (3) et de l'autre sur la dalle (1).

4. Conduite de transport de fluide selon l'une des revendications précédentes, caractérisée par le fait que la dalle (1) en béton armé et/ou précontraint est coulée en place.

5. Conduite de transport de fluide selon l'une des revendications 1 à 3, caractérisée par le fait que la dalle (1) en béton armé ou précontraint est constituée en éléments préfabriqués.

6. Conduite de transport de fluide selon l'une des revendications précédentes, caractérisée par le fait que la dalle en béton (1) est recouverte par une paroi mince (5) s'étendant entre les deux profilés (3, 3') et constituant une peau d'étanchéité.

7. Conduite de transport de fluide selon la revendication 6, caractérisée par le fait qu'un coulis de ciment est placé entre la paroi mince (5) et la face supérieure de la dalle (1) pour assurer la répartition sur toute la surface de la dalle (1) des efforts appliqués sur la paroi (5).

8. Conduite de transport de fluide selon la revendication 6, caractérisée par le fait que la peau d'étanchéité est une plaque métallique (5) soudée le long de ses deux bords latéraux sur les deux profilés de jonction (3, 3').

9. Conduite de transport de fluide selon la revendication 3, caractérisée par le fait que la dalle en béton (1) est recouverte par une paroi mince (5) comportant deux bords latéraux parallèles à l'axe longitudinal sur lesquels sont ménagées, respectivement, deux rainures (36) concaves vers le haut, et les deux profilés longitudinaux (3,3') de jonction de la voûte (2) comprennent chacun une partie inférieure arrondie formant une bride (22) de profil inverse de celui de la rainure (36) correspondante de la plaque (5) et s'appliquant sur celle-ci, avec interposition d'un joint d'étanchéité (6), chaque bride (22) étant associée à des moyens de serrage (7) répartis sur toute sa longueur et prenant appui d'un côte sur la bride (22) et de l'autre sur la dalle (1).

10. Conduite de transport de fluide selon la revendication 9, caractérisée par le fait que les profilés de jonction de la voûte sont constitués par des pièces de rives (3, 3') ayant une section droite en forme de crosse comprenant une partie (22) arrondie en gouttière formant la bride de fixation (22) et prolongée par une partie rectiligne (27), constituant la naissance de la voûte cette dernière étant constituée par au moins une plaque cintrée (2) fixée le long de ses deux bords latéraux respectivement sur les extrémités des parties rectilignes (27) des deux pièces de rives (3, 3').

11. Conduite de transport de fluide selon la revendication 10, caractérisée par le fait que l'orientation des pièces de rives (3, 3') peut être réglée avant la fixation de la voûte (2) par rotation des parties arrondies (22) des brides sur les rainures concaves (36) de façon à faire varier l'inclinaison (A) de la partie rectiligne (27) par rapport à la dalle (1) et, par conséquent, la section de passage de la conduite.

12. Conduite de transport de fluide selon la revendication 10, caractérisée par le fait que les caractéristiques dimensionnelles et mécaniques, d'une part des rainures concaves (36) et des pièces de rives (3, 3'), et d'autre part des plaques (2) constituant la voûte, sont déterminées en fonction des contraintes spécifiques supportées par lesdites pièces.

13. Conduite de transport de fluide sous une pression élevée, pouvant dépasser 10 bars, constituée par assemblage sur le site de construction d'une pluralité d'éléments de parois métalliques (2), soudés les uns aux autres le long de leurs bords adjacents de façon à limiter un espace tubulaire, fermé en section transversale et s'étendant suivant un axe longitudinal, cette conduite présentant, en section transversale à l'axe, un profil circulaire tronqué comprenant une partie supérieure, constituée d'une paroi métallique (2) cintrée en forme de voûte couvrant un secteur circulaire entre deux bords latéraux écartés (21,21') et un fond (5) constitué d'une plaque métallique (5) soudée le long de ses deux bords latéraux, respectivement sur deux profilés métalliques de jonction (3,3') comportant chacun une partie supérieure soudée le long du bord latéral (21,21') correspondant de la voûte (2) et se raccordant tangentiellement à la naissance de celle-ci, et la dite conduite étant associée à au moins deux pièces entretoises rigides (13) en béton armé sur lesquelles sont fixés lesdits profilés de jonction (3, 3'), chacun par une partie inférieure (31) scellée dans lesdites pièces entretoises (13).

14. Conduite de transport de fluide selon la revendication 13, caractérisée par le fait qu'elle est constituée de tronçons préfabriqués soudés les uns à la suite des autres et que chaque tronçon est associé à au moins deux pièces entretoises en forme de poutrelles (13) constituant des pieds de positionnement de la base de la conduite.

15. Conduite de transport de fluide selon l'une des revendication 13 et 14, caractérisée par le fait que, après la pose, les pièces entretoises (13) sont noyées dans du béton coulé en place de façon à former une dalle continue.

16. Conduite de transport de fluide selon l'une des revendications précédentes, caractérisée par le fait que les extrémités transversales (26, 26') en vis-à-vis de deux éléments de voûte successifs (2, 2') sont reliées par un joint annulaire formant, en section droite, au moins une onde (65) permettant la dilatation longitudinale de la voûte supérieure.

17. Procédé de réalisation d'une conduite selon l'une des revendications 1 à 12, caractérisé par le fait que ayant réalisé, au niveau voulu, une surface de pose aplanie (41), on réalise sur une certaine longueur, une dalle continue (1) en béton armé sur laquelle on scelle au moins deux profilés de jonction longitudinaux (3 et 3') dont on règle l'alignement avec les profilés correspondant de la partie déjà posée, puis l'on pose les éléments de paroi cintrée préfabriqués pour former une voûte (2) dont les bord latéraux (21, 21') se raccordent tangentiellement aux deux profilés (3 et 3') et l'on soude les éléments de paroi (2) entre eux et avec lesdits profilés (3 et 3').

18. Procédé de réalisation d'une conduite selon la revendication 17, caractérisé par le fait que, les deux profilés (3 et 3') étant munis de parties inférieures formant pattes de scellement, on ménage à l'avance dans la dalle (1) des logements pour les dites pattes de scellement et , après avoir posé et aligné les profilés (3 et 3') avec les profilés déjà posés, on les scelle dans les dits logements.

19. Procédé de réalisation d'une conduite selon la revendication 17, caractérisé par le fait que la dalle (1) est constituée d'éléments préfabriqués sur lesquels sont fixés à l'avance les profilés de jonction (3,3').

20. Procédé de réalisation d'une conduite selon la revendication 19, caractérisé par le fait que les profilés de jonction (3 et 3') sont reliés par une plaque métallique (5) constituant un coffrage perdu pour la coulée de la dalle en position retournée.

21. Procédé de réalisation d'une conduite selon l'une des revendications 17 et 18, caractérisé par le fait que la dalle rigide (1) est réalisée en béton coulé en place à l'avancement.

22. Procédé de réalisation d'une conduite selon la revendication 21, caractérisé par le fait que, ayant aménagé au niveau voulu une surface de pose aplanie, on pose sur celle-ci les armatures (15) d'une dalle en y plaçant les inserts nécessaires, puis on coule du béton entre des coffrages adéquats pour noyer les armatures (15) en réalisant la dalle continue (1).

23. Procédé de réalisation d'une conduite selon l'une des revendications 13 à 16, caractérisé par le fait que, pour construire chaque tronçon de conduite, on réalise à l'avance la partie inférieure de la conduite comprenant deux profilés longitudinaux (3,3') écartés et parallèles, reliés rigidement entre eux par une plaque (5) appliquée sur au moins une pièce entretoise (13) en béton armé et que, l'on pose la dite partie inférieure sur la surface de pose (41) en alignant et en soudant les profilés (3 et 3') et la plaque (5) avec la partie déjà posée, puis l'on pose les éléments préfabriqués formant la voûte (2) en soudant les bords latéraux (21, 21') de celle-ci sur les profilés longitudinaux (3 et 3'), les pièces entretoises (13) étant éventuellement noyées ensuite dans du béton coulé en place pour former une dalle continue.

## Claims

1. A fluid-conveying conduit of large cross section extending along a longitudinal axis and formed by assembling, on a laying surface, a plurality of prefabricated longitudinal elements (1,2) sealingly connected allowing to support an internal pressure, said conduit comprising in cross section an upper part (2) constituted with a thin metallic wall curved in a vault shape essentially circular and a lower part (1) constituted with a reinforced concrete slab forming a rigid base standing on the ground and delimited by a continuous upper face (11) constituting the bottom of the conduit, characterized in that said curved metallic wall (2) forming the upper part is welded along the two lateral edges thereof parallel to the concrete slab respectively on the upper ends of two metallic joining profiled members (3,3) each comprising an upper part tangentially directed at the beginning of the vault and a lower part (31) fixed sealingly to the concrete slab (1) allowing to resist to the internal pressure.

2. The fluid-conveying conduit according to claim 1, characterized in that the lower part (31) of each metallic joining profiled member (3,3') is bedded inside the concrete slab (1).

3. The fluid-conveying conduit according to claim 1, characterized in that the lower part of each joining profiled member (3,3') extends along a corresponding application face of the concrete slab on which it is applied by a plurality of clamping stems (7) regularly provided on the length thereof and bearing from one side on said lower part of the profiled member (3) and from the other side on the slab (1)

4. The fluid-conveying conduit according to one of the preceding claims, characterized in that the slab (1) made of reinforced and/or prestressed concrete is poured in situ.

5. The fluid-conveying conduit according to one of claims 1 to 3, characterized in that the slab (1) made of reinforced or prestressed concrete comprises prefabricated elements.

6. The fluid-conveying conduit according to one of the preceding claims, characterized in that the concrete slab (1) is covered by a thin wall (5) extending between the two profiled members (3,3') and forming a sealing skin.

7. The fluid-conveying conduit according to claim 6, characterized in that a cement slurry is placed between the thin wall (5) and the upper face of the slab (1) in order to ensure the distribution over the entire surface of the slab (1) of the forces applied on the wall (5).

8. The fluid-conveying conduit according to claim 6, characterized in that the sealing skin is a metallic plate (5) welded along the two lateral sides thereof on the two profiled members (3,3').

9. The fluid-conveying conduit according to claim 3, characterized in that the concrete slab (1) is covered by a thin wall (5) comprising two lateral edges parallel to the longitudinal axis on which are provided respectively two concave grooves (36) and the two longitudinal profiled members (3,3') for the connection of the vault (2) comprise each a rounded lower part forming a flange (22) having a reverse profile of those of the corresponding groove (36) of the plate (5) and bearing on said latter with the provision of a sealing joint (6) each flange (22) being associated with clamping means (7) provided on the whole length thereof and bearing from one side on the flange (22) and on the other side on the slab (1).

10. The fluid-conveying conduit according to claim 9, characterized in that the joining profiled members of the vault comprise margin parts (3,3') having a crook right section comprising a rounded gutter like part (22) forming the fixing flange (22) and extended by a rectilinear part (27) constituting the beginning of the vault, said latter comprising at least one curved plate (2) fixed along its two lateral edges respectively on the ends of the rectilinear parts (27) of the two margin parts (3,3').

11. The fluid-conveying conduit according to claim 10, characterized in that the orientation of the margin parts (3,3') may be adjusted before the fixing of the vault (2) by rotating the rounded parts (22) of the flanges on the concave grooves (36) so as to vary the inclination (A) of the rectilinear part (27) with respect to the slab (1) and consequently the cross section of the conduit.

12. The fluid-conveying conduit according to claim 10, characterized in that the dimensional and mechanical features, on the one hand, of the concave grooves (36) and the margin parts (3,3') and, on the other hand, of the plates (2) forming the vault are determined as a function of the specific stresses to which said parts are subjected.

13. The fluid-conveying conduit under a high pressure liable to be upper than 10 bars formed by assembling, on site, a plurality of metallic wall members (2) welded one to another along the adjacent edges thereof in order to delimit a tubular space, closed in cross section and extending according to a longitudinal axis, said conduit having in cross section to the axis, a truncated circular profile comprising an upper part having a vault curved metallic wall (2) covering a circular sector between two lateral spaced edges (21,21') and a bottom (5) comprising a metallic plate (5) welded along the two lateral edges thereof respectively on two metallic joining profiled members (3,3') each having an upper part, welded along the vault (2) corresponding lateral edge (21,21') and connected tangentially at the beginning thereof, and said conduit cooperates with at least two reinforced concrete rigid crosspieces (13) on which are fixed said connecting profiled members (3,3') each by a lower part (31) bedded in said crosspieces (13).

14. The fluid-conveying conduit according to claim 13, characterized in that it comprises prefabricated sections welded end to end and each section cooperates with at least two crosspieces like girders (13) constituting positioning feet of the conduit base.

15. The fluid-conveying conduit according to one of claims 13 and 14, characterized in that after laying, the crosspieces (13) are embedded in in situ made concrete in order to form a continuous slab.

16. The fluid-conveying conduit according to one of the preceding claims, characterized in that the opposite transverse ends (26,26') of two successive vault elements (2,2') are connected by an annular joint forming, in transverse section, at least one wave (65) which permits the longitudinal expansion of the upper vault.

17. A method for the construction of a conduit according to one of claims 1 to 12, characterized by making at the desired level a plane laying surface (41), then making on a suitable length a reinforced concrete continuous slab (1) on which are bedded at least two longitudinal joining profiled members (3 and 3') adjusting the aligment of them with those of the corresponding profiled members already laid, then laying the prefabricated curved wall elements forming a vault (2), the lateral edges (21,21') thereof engaging tangentially the two profiled members (3 and 3') and welding the wall elements (2) therebetween and with said profiled members (3 an 3').

18. A method for the construction of a conduit according to claim 17, characterized in that the two profiled members (3 an 3') having lower parts forming bedding legs, it is provided beforehand in the slab (1) recesses for said bedding legs and after having laid and aligned the profiled members (3 and 3') which those already laid, they are bedded in said recesses.

19. A method for the construction of a conduit according to claim 17, characterized in that the slab (1) comprises prefabricated elements on which are fixed beforehand the profiled joining members (3,3').

20. A method for the construction of a conduit according to claim 19, characterized in that the profiled joining members (3 and 3') are connected by a metallic plate (5) forming a permanent formwork for the pouring of the slab in inversed position.

21. A method for the construction of a conduit according to one of claims 17 an 18, characterized in that the rigid slab (1) is made of concrete poured in situ during the work.

22. A method for the construction of a conduit according to claim 21, characterized by preparing at the desired level a flat laying surface, then laying on it the reinforcements (15) of a slab with introduction of the necessary inserts, then pouring concrete between appropriate formwork in order to embed the reinforcements (15) and construct a continuous slab (1).

23. A method for the construction of a conduit according to one of claims 13 to 16, wherein each conduit section, is constructed by beforehand making the lower part of the conduit comprising two longitudinal profiled members (3,3) spaced and parallel, rigidly connected therebetween by a plate (5) which is applied on at least one reinforced concrete crosspiece (13), laying said lower part on the laying surface (41) while aligning and welding the profiled members (3 and 3') and the plate (5) with the part already laid, then laying the prefabricated elements forming the vault (2) by welding the lateral edges (21,21') thereof on said longitudinal profiled members (3 and 3') the crosspieces (13) being eventually embedded after in the concrete poured in situ to form a continuous slab.

## Patentansprüche

1. Fluidtransportleitung mit grossem Querschnitt, die sich gemäss einer Längsachse erstreckt und durch Zusammenfügen auf einer Verlegungsfläche von mehreren, zum Standhalten eines Innendruckes dichtfest miteinander verbundenen, vorgefertigten Längselemente (1, 2) erstellt wird, wobei die Leitung im Querschnitt aus einem eine dünne Metallwand aufweisenden, bogenförmig als Gewölbe ausgebildeten, wesentlich kreisförmigen Oberteil (2) sowie aus einem Unterteil (1) besteht, das aus einer einen starren Untergrund bildenden, auf dem Boden aufliegenden Stahlbetonplatte gebildet und durch eine durchlaufende den Leitungsboden bildende Oberfläche (11) begrenzt ist, dadurch gekennzeichnet, dass die das Oberteil bildende, bogenförmig ausgebildete Metallwand (2) entlang ihrer beiden zur Betonplatte parallelen Seiten (21, 21') jeweils an den oberen Enden von zwei metallischen Verbindungsprofile (3, 3') verschweisst ist, die jeweils aus einem tangential zum Gewölbefuss gerichteten Oberteil und aus einem zum Standhalten des Innendruckes dichtfest an der Betonplatte (1) befestigten Unterteil (31) bestehen.

2. Fluidtransportleitung nach Anspruch 1, dadurch gekennzeichnet, dass das Unterteil (31) von jedem metallischen Verbindungsprofil (3, 3') innen in der Betonplatte (1) verankert ist.

3. Fluidtransportleitung nach Anspruch 1, dadurch gekennzeichnet, dass das untere Teil von jedem Verbindungsprofil (3, 3') sich entlang einer entsprechenden Auflagefläche der Betonplatte erstreckt, auf welcher dieses durch mehrere über deren Länge regelmässig verteilten Stangen (7) gehalten wird, die auf der einen Seite auf diesem unteren Teil des Profils (3) und auf der anderen Seite auf der Platte (1) abgestützt sind.

4. Fluidtransportleitung nach einem der vorhergehenden Ansprüche, dadurch gekennzeichnet, dass das Giessen der aus Stahlbeton bzw. aus vorgespanntem Beton bestehende Platte (1) in situ erfolgt.

5. Fluidtransportleitung nach einem der Ansprüche 1 bis 3, dadurch gekennzeichnet, dass die Platte (1) aus Stahlbeton oder vorgespanntem Beton aus mehreren vorgefertigten Elemente besteht.

6. Fluidtransportleitung nach einem der vorhergehenden Ansprüche, dadurch gekennzeichnet, dass die Betonplatte (1) von einer zwischen den beiden Profilen (3, 3') sich erstreckenden, eine Dichtungshaut bildende dünnen Wand (5) überdeckt ist.

7. Fluidtransportleitung nach Anspruch 6, dadurch gekennzeichnet, dass zur Verteilung der über die gesamte Oberfläche der Platte (1) auf die Wand (5) ausgeübten Kräfte ein Zementgemisch zwischen der dünnen Wand (5) und der Oberfläche der Platte (1) vergossen wird.

8. Fluidtransportleitung nach Anspruch 6, dadurch gekennzeichnet, dass die Dichtungshaut eine auf den beiden Verbindungsprofile (3, 3') entlang ihrer beiden Seiten geschweissten Metallplatte (5) ist.

9. Fluidtransportleitung nach Anspruch 3, dadurch gekennzeichnet, dass die Betonplatte (1) durch eine dünne Wand (5) mit zwei zur Längsachse parallelen Seiten abgedeckt ist, die je zwei nach oben gerichteten konkave Nuten (36) aufweisen, und dass die beiden längsverlaufenden Verbindungsprofile (3, 3') des Gewölbes (2) jeweils ein abgerundetes Unterteil aufweisen, das ein Spanneisen (22) bildet mit einem zu demjenigen der entsprechenden Nut (36) der Platte (55) verkehrten Profil und auf dieser unter Zwischenschaltung einer Dichtung (6) aufliegt, wobei jedem Spanneisen (22) über dessen Länge verteilte Spannungsmittel (7) zugeordnet sind, die auf der einen Seite auf dem Spanneisen (22) und auf der anderen Seite auf der Platte (1) abgestützt sind.

10. Fluidtransportleitung nach Anspruch 9, dadurch gekennzeichnet, dass die Verbindungsprofile des Gewölbes aus Randstücke (3, 3') mit einem im Querschnitt als Bogenstab ausgebildeten Abschnitt bestehen, der ein als Rinne abgerundetes das Befestigungsspanneisen (22) bildendes Teil (22) aufweist, das durch ein gerades den Fuss von dem Gewölbe bildendes Teil (27) verlängert ist, wobei das letztere aus mindestens einer gebogenen Platte (2) besteht, die entlang ihrer beiden Seiten jeweils an den Enden der geraden Teile (27) der beiden Randstücke (3, 3') befestigt ist.

11. Fluidtransportleitung nach Anspruch 10, dadurch gekennzeichnet, dass die Ausrichtung der Randstücke (3, 3') vor der Befestigung des Gewölbes (2) durch Drehung der abgerundeten Teile (22) der Spanneisen auf den konkav ausgebildeten Nuten (36) so einstellbar ist, dass die Neigung (A) des geraden Teils (27) zur Platte (1), und demzufolge, den Durchlaufquerschnitt der Leitung geändert werden kann.

12. Fluidtransportleitung nach Anspruch 10, dadurch gekennzeichnet, dass die mechanischen und dimensionnellen Merkmale der konkaven Nuten (36) und der Randstücke (3, 3') einerseits sowie der das Gewölbe bildenden Platten (2) anderseits entsprechend der durch diese Teile aufnehmenden spezifischen Spannungen bestimmt sind.

13. Fluidtransportleitung unter Hochdruck bis über 10 bar, bestehend aus mehreren auf der Baustelle zusammengebauten metallischen Wandelemente (2), die miteinander entlang deren benachbarten Seiten so zusammengeschweisst werden, dass ein rohrförmiger, im Querschnitt geschlossener und gemäss einer Längsachse sich erstreckender Raum begrenzt ist, wobei diese Leitung querschnittsmässig zur Achse einen kreisförmigen abgestumpften Profil mit einem Oberteil aufweist, das aus einer bogenförmig als Gewölbe ausgebildeten einen kreisförmigen Sektor zwischen zwei im Abstand angeordneten Seiten (21, 21') abdeckenden Metallwand (2) besteht, und mit einem Boden aus einer Metallplatte (5), die entlang ihrer beiden Seiten jeweils auf die metallischen Verbindungsprofile (3, 3') geschweisst wird, die je ein Oberteil umfassen, das entlang der entsprechenden Seiten (21, 21') vom Gewölbe (2) geschweisst wird und sich tangential an dem Gewölbefuss anschliesst, und wobei dieser Leitung mindestens zwei starre Distanzstücke (13) aus Stahlbeton zugeordnet sind, auf denen diese Verbindungsprofile (3, 3') jeweils mit einem in diesen Distanzstücke verankerten Unterteil (31) befestigt sind.

14. Fluidtransportleitung nach Anspruch 13, dadurch gekenneichnet, dass sie aus vorgefertigten, nacheinander zusammengeschweissten Abschnitte besteht, und dass jedem Abschnitt mindestens zwei als Träger (13) ausgebildete Distanzstücke zugeordnet sind, die Positionierungsfüsse der Leitungsbasis bilden.

15. Fluidtransportleitung nach einem der Ansprüche 13 und 14, dadurch gekennzeichnet, dass zur Bildung einer durchgehenden Platte die Distanzstücke (13) nach dem Einbau in dem in situ gegossenen Beton eingelassen werden.

16. Fluidtransportleitung nach einem der vorhergehenden Ansprüche, dadurch gekennzeichnet, dass zur Längsdehnung vom oberen Gewölbe die von zwei aufeinanderfolgenden gegenüberliegenden Querenden (26, 26') über einen kreisförmigen, im Querschnitt mindestens eine Welle (65) bildenden Stoss verbunden sind.

17. Verfahren zur Ausführung einer Leitung nach einem der Ansprüche 1 bis 12, dadurch gekennzeichnet, dass nach Ausführung auf der gewünschten Höhe einer geebneten Verlegungsfläche (41) eine durchgehende Stahlbetonplatte (1) über eine bestimmte Länge gefertigt wird, auf welcher mindestens zwei längliche Verbindungsprofile (3 und 3') verankert werden, die mit den entsprechenden Profile des bereits verlegten Teils ausgefluchtet werden, dann die vorgefertigten bogenförmigen Wandelemente zur Bildung eines Gewölbes (2) verlegt werden, dessen Seiten (21, 21') sich tangential an die beiden Profile (3 und 3') anschliessen und das Verschweissen der Wandelemente (2) miteinander sowie mit diesen Profilen (3 und 3') erfolgt.

18. Verfahren zur Ausführung einer Leitung nach Anspruch 17, dadurch gekennzeichnet, dass, wobei die beiden Profile (3 und 3') als Bankeisen ausgebildete Unterteile aufweisen, in der Platte (1) Sitze zur Aufnahme dieser Bankeisen vorgefertigt werden, und dass nach Verlegung und Ausfluchten der Profile (3 und 3') mit den bereits verlegten Profile diese in diesen Aufnahmen verankert werden.

19. Verfahren zur Ausführung einer Leitung nach Anspruch 17, dadurch gekennzeichnet, dass die Platte (1) aus vorgefertigten Elemente mit vorher befestigten Verbindungsprofile (3, 3') besteht.

20. Verfahren zur Ausführung einer Leitung nach Anspruch 19, dadurch gekennzeichnet, dass die Verbindungsprofile (3 und 3') über eine Metallplatte (5) verbunden sind, die eine Einwegschalung bildet zum Giessen der Platte in umgekehrter Stellung.

21. Verfahren zur Ausführung einer Leitung nach einem der Ansprüche 17 und 18, dadurch gekennzeichnet, dass die starre Platte (1) aus in situ gegossenem Beton fortschreitend gefertigt wird.

22. Verfahren zur Ausführung einer Leitung nach Anspruch 21, dadurch gekennzeichnet, dass nach Anfertigung auf der gewünschten Höhe einer geebneten Verlegungsfläche die Bewehrungen (15) einer Platte durch Einsetzen der erforderlichen Inserts verlegt werden, dann Beton zwischen geeignete Schalungen zur völligen Einbettung der Bewehrungen (15) zwecks Ausführung der durchgehenden Platte (1) vergossen wird.

23. Verfahren zur Ausführung einer Leitung nach einem der Ansprüche 13 bis 16, dadurch gekennzeichnet, dass zur Erstellung eines jeden Leitungabschnittes das untere Teil der Leitung bestehend aus zwei im Abstand angeordneten parallelen Längsprofile (3, 3') vorgefertigt wird, die starr miteinander über eine auf mindestens einem Distanzstück (13) aus Stahlbeton zur Auflage kommenden Platte (5) verbunden sind, und dass dieses untere Teil auf der Verlegungsfläche (41) durch Ausfluchten und Verschweissen der Profile (3 und 3') und der Platte (5) mit dem bereits verlegten Teil angebracht wird, dann die das Gewölbe (2) bildende vorgefertigten Elemente eingesetzt werden, in dem die Seiten (21, 21') des selben auf den Längsprofile (3 und 3') verschweisst werden, wobei zur Herstellung einer durchgehenden Platte die Einbettung der Distanzstücke (13) eventuell danach im vor Ort gegossenen Beton erfolgt.
